# EUROPEAN PATENT APPLICATION

(11) **EP 0 925 721 A2**
(43) Date of publication of application: **30.06.1999**
(21) Application number: 98610044.4
(22) Date of filing: 26.11.1998
(51) Int. Cl.: A23G 7/00, A23G 9/28

(54) **A method of handling ice-cream articles e.g. cornets and gripping aggregate therefor**

(30) Priority: 28.11.1997 DK 137997
(71) Applicant: Tetra Pak Hoyer A/S, 8270 Hojbjerg (DK)
(72) Inventor: Rasmussen, Hendrik Guldmann, 8310 Tranbjerg (DK)
(74) Representative: Skoett-Jensen, Knud

(57) **Abstract**

In the production of ice-cream cornets and ice lollies, it is current practice to use gripping and supporting means, among other things to enable the products to be secured in a hanging position for the execution of a dipping operation in a coating medium such as chocolate. The support arrangements normally used are quite complicated, and with the invention it has been found that ice-cream cornets can easily be supported in both a simple and gentle manner by merely being inserted in a support hole in a thin rubber plate which, as an annular clamping lip, extends in towards the support hole from the edge of a broader opening in a support part for the rubber plate. Upon insertion of the cornet, the clamping lip will be axially bent out to form a self-blocking extraction lock, the effect of which can, however, be overcome by forced pressing-out of the cornet. In a quite corresponding manner, it is possible to grip and hold a flat lolly stick by inserting it into a narrow slot in the rubber plate.

## Description

The present invention concerns a method and a gripping and holding aggregate for the handling of cornets and other product carriers in connection with the production of edible ice products. While these kinds of conical and crisp items are very easy to support in their normally upright position, they are correspondingly difficult to support when turned upside down, i.e., for example, with the tip of the cornet facing upwards, which is relevant when the top end of the product shall be conveyed for immersion in a bath containing a coating medium such as chocolate. Correspondingly, it is problematic to effect a separation of the cornets from the stacks in which they are normally delivered, in that the separation must be carried out with high efficiency from the magazine stacks, where the outermost conical item must be drawn off with a grip which from a given diametrical area is drawn out towards an area with decreasing diameter, which results in poor separation conditions when a certain coherence arises in the stack, and when the items can not tolerate greater clamping influences. It is naturally the same kind of problem which arises with the said supporting of the cornet in reversed position over a dipping bath. If use is made of a clamping effect which is too strong, the cornet can be crushed, and if the holding or supporting effect is too weak, a crumbling of the product can arise with the result that it must be totally discarded.

With the hitherto known technique in this area, use has predominantly been made of needle arrangements by which no clamping against the outer side of the cornet takes place in the traditional sense, but where a number of needles are inserted in an annular area of the cornet, whereby a reasonably safe support and withdrawal grip can be achieved. The cornet can be subject to certain damages, but the main problem is that these needle arrangements are quite expensive to produce and may well give rise to operational disturbances.

With the invention it has been realised that alternative use can well be made of a flat clamping effect in against the outer side of the cornet body, i.e. merely providing that care is taken to ensure that this clamping effect arises all the way around and not only against single diametrically-opposite parts of the cornet holster. Such a clamping effect can even be realized in an extremely simple manner, i.e. completely without mechanically moving elements, in that a gripping or holding element can be configured as a plate element with layer parts of an elastomer material in which there are circular holes with a diameter which is significantly smaller than the diameter of the mouth on the conical item. Such a plate element can be inserted over the relevant conical item or items, whereby the edge of the individual holes in the elastomeric material will be bent out against the direction of insertion towards the increasing diameter of the conical items. The hole in the elastomer material forms a lip edge on an annular lip which extends inwards from a somewhat larger opening in a rigid support element, and by the said bending-out this annular lip is deformed into a conical shape under light outwards extension of the hole edge for clamping around the cornet. When this grip has been established, the engagement will be self-locking under moderate reverse displacement forces, including the weight-loading of the cornet in its said reversed hanging position, in that a reversed displacement force will have a straightening-out influence on the lip and herewith cause a further tightening against the side of the cornet.

On the same basis, the said holder will be suitable for gripping around the outer side of a cornet standing out from a magazine stack, with a view to the drawing-out of a cornet while overcoming a certain internal resistance against withdrawal.

It must be emphasised that it has been found that it is possible to use the holder for the aforesaid purpose with good security and gentleness against the cornets and that nevertheless it is also possible to release the cornets from the holder by a firm pressure against the cornet's pointed area, without said holding engagement giving rise to damage to the cornets. Although the annular lips seek to maintain the self-locking effect, with a provoked, short sliding out of the cornet there will arise a reduction, relatively seen, in the thickness of the cornet, whereby the grip is appreciably weakened and is hereby quickly and totally released.

Considerations could be given to a soft material, e.g. sponge rubber, for the careful holding of the cornets over a broad annular surface area, but with the invention it has been found fully justifiable to work with a rather thin, compact lip material which is easy to clean, preferably a silicone rubber material with a hardness of 35-70 degrees shore and preferably in the upper part of this range, e.g. 60 degrees shore.

There are other carrier members for edible ice products which are relevant in connection with the invention, e.g. already ordinary, projecting carrier pin or plate pieces, which may also desirably be gripped and held in connection with a dipping of the ice product in a coating bath. The same applies to so-called "Taco"-products, where a plate shaped ice body is partially surrounded by a folded waffle plate member. The product carriers here referred to are not conical and wedge shaped, but nevertheless they will be grippable in being introduced between opposed clamping lip portions, which are bent out by such an introduction and thereafter will be moderately retaining and sufficiently carrying until the gripped item is affected by a reverse release force for releasing the product from the holding engagement.

On this background the method according to the invention is characterized by the steps specified in claim 1, while the gripping and holding aggregate is characterized by the features specified in claim 3.

The invention will now be described in more detail with reference to the drawing, where
Fig. 1 is a perspective view of an embodiment of the support arrangement according to the invention,
Figs. 2 and 3 are cross-sectional views of a second embodiment,
Figs. 4 and 5 are schematic side views illustrating the removal of cones from a magazine;
Fig. 6 is a perspective view of a carrier unit for ice lollies;
Fig. 7 is a sectional view thereof,
Fig. 8 is a perspective view of a holder for Taco products; and
Fig. 9 is an end view thereof.

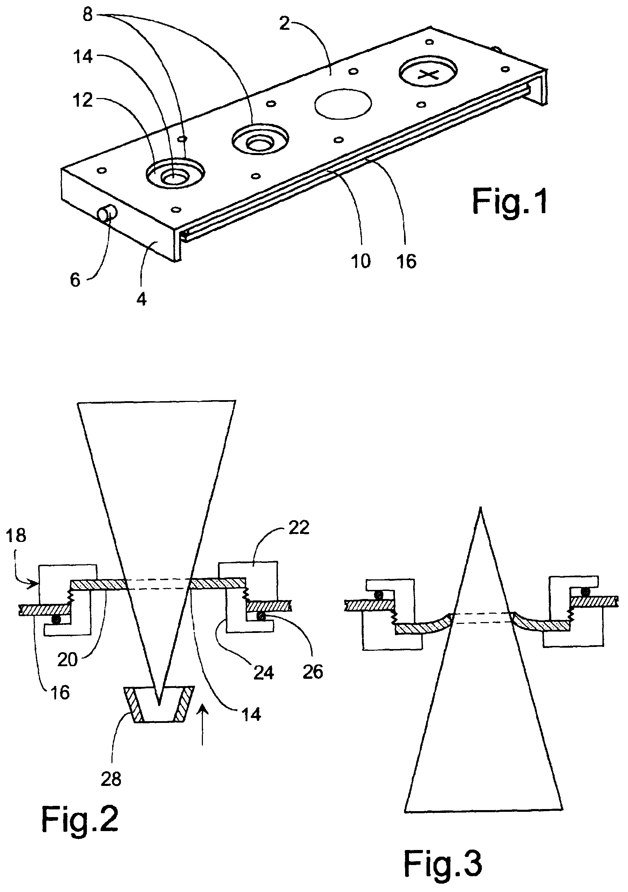

The support element seen in fig. 1 consists of an upper metal plate part 2 which has bent-down end parts 4 from which pins 6 extend for connection with a not-shown chain drive system. The plate part 2 is provided with a series of holes 8. Under the plate part 2 there is placed a rubber plate 10 which at the holes 8 extends inwards in the formation of annular ring lips 12 with central holes 14. At the underside, the rubber plate 10 is covered with a second metal plate 16 which in a manner not shown is configured with corresponding holes which are slightly larger than the holes 8.

In fig. 2 is shown a second embodiment which is based on the use of a single support plate 16 with holes in which there are mounted annular holders 18, each of which is configured with a plate ring 20 of rubber, the outer edge area of which is clamped between an upper flange part 22 and a lower flange part 24. The latter is provided with a lower collar for the accommodation of an O-ring 26, by means of which the assembled parts 20, 22, 24 can be secured in a stable manner on the edge of the hole in the plate 16. With this embodiment it is easy to replace a possibly damaged plate ring 20.

As indicated in fig. 2, the cornets can be mounted by simply inserting them down in the holes 14, respectively by the leading-up of these gripping and holding arrangements around cornets in magazine stacks, and the pressing-in is effected so far that the rubber plate rings 20 are depressed to assume a conical shape. Thereafter, the grip thus established will be able to resist an appreciable withdrawal force on the cornet, e.g. so that this can be turned upside down as shown in fig. 3 for the execution of a dipping operation on the top of the cornet, i.e. the part extending downwards.

It is possible, however, to loosen the cornets from the grip by a semi-hard pressing-out, e.g. by the use of a conical ejection ring 28 cf. fig. 2.

It should be noted that the lip-ring plates 20 should display such a resiliency that they can more or less adapt themselves to irregularities in the gripped section of the cornet. Moulded cornets can have a quite regular conical form with circular cross-section, but preference is often shown for cornets of the conventional type, i.e. rolled-up pancake wafers, and in addition to a distinct waffle pattern on the outside, these also have an overlapping edge. When use is made of rubber material which is too stiff or thick, the holding pressure arising at this overlapping edge will be so great that it very easily breaks, which should happen only in exceptional cases.

The hole in the rubber plate pieces is formed both easiest and best with quite cylindrical form. With the bending-out of the plate material to the conical holding position, there will hereby arise a sharp hole edge area which is pressed against the outside of the cornet, i.e. in precisely that area which most willingly allows local deformation. This is an advantage e.g. for the accommodation of the irregularities which are due to the presence of the above-mentioned waffle pattern.

It is to be recommended that the holders and in particular the rubber plate pieces be adapted to the cornets in the concrete production, since for different types of cornets that may be different optimal conditions, e.g. with respect to the location of the engagement area of the cornets. It can be demonstrated that for specific cornet types it is possible to point out an area, in which the cornet is least vulnerable towards a relatively high engagement pressure, e.g. 32 mm above the cornet tip.

Instead of or in addition to the hole 14 in the rubber place it will be possible to use a star shaped throughcut as shown at 14' in Fig. 1.

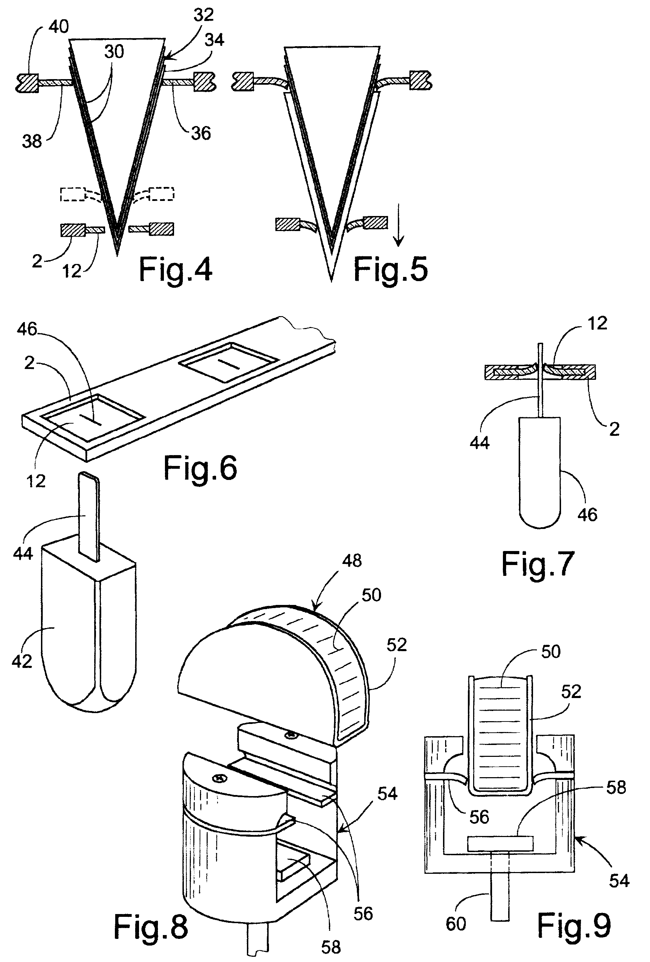

In Figs. 4 and 5 it is shown that a unit 2,12 can be used for the retraction of cone members 30 from a magazine pile 32, which is generally retained in the magazine in that the broad top edge 34 of the lowermost cone in the pile is supported by the edge 36 of a slightly narrower hole in a rubber disc 38 in a magazine wall portion 40. When the unit 2,12 is moved upwardly about the lowermost cone 30 the rubber lip 12 will be bent downwardly as shown in dotted lines in Fig. 4, and when the unit 2,12 is thereafter moved downwardly the gripping engagement thus established with the cone will resuit in the latter being drawn downwardly from the carrier edge 36, which is temporarily bent down as shown in Fig. 5. As soon as the carrier edge 36 is released, this edge will flick upwardly and inwardly so as to now carry the next cone and therewith the remaining pile, while the retracted lower cone can be conveyed further in its conveying path.

In Figs. 6 and 7 it is illustrated how an ice body 42 with a projecting, flat carrier stick 44 can be gripped by a carrier unit 2,12, in which the elastomeric plate portions 12 are provided only with a cutting line 46 for effectively gripping the carrier stick 44 as shown in Fig. 5.

Figs. 8 and 9 show a sandwich icecake in the form of a so-called Taco product comprising a semi-circular ice-cream disc body 50 and a substantially circular waffle plate 52 folded up about the bottom and opposed sides of this body. It is actual to grip such a product by its root portion in order to subject the product to a dipping of its rounded edge in a chocolate bath, the product hereby being brought to pivot in such a manner that its curved edge is moved through the surface of the chocolate bath with such a small immersion depth which is sufficient just for the coating of the curved edge area itself.

According to the invention, also in this connection it is possible to use a clamp holder as disclosed in the foregoing, viz. a holder 54 provided with opposed rubber lip plates 56 projecting towards each other, such that they are bent out for holding the product in response to introduction of the product between them, Fig. 9. The holder 54, which may be pivotally suspended for enabling the said local immersion of the curved edge portion of the icecake product, may be provided with a rejector block 58 which, by external actuation of an associated rejector rod 60 will be operable for discharging the product from the holder 54.

## Claims

1. Method for the gripping and supporting of edible ice products in the form of ice-cream cornets, sandwich icecakes or ice lollies, in particular with the view to the execution of a more or less extensive immersion of the product in a bath containing a coating medium or coolant, by which method a holding engagement between a support aggregate and an outer side area of the product or a holding stick extending from the product is provided in a gripping station, after which the support aggregate is moved through a relevant advancing path optionally including said immersion with the product hanging in the support aggregate, after which the holding engagement is released at the end of this advancing path, **characterized** in that use is made of a support aggregate which for co-operation with the ice product has an elastomeric plate part with a penetration area which is fed for push-in connection with the ice product, i.e. by a relative insertion of the pointed end of a cornet, an edge part of a sandwich ice cake or the free end of a holding stick on the ice product respectively, through the relevant area for the forming of an associated local outward deflection of the bordering edge part of the penetration area, so that these edge parts thereafter provide a self-locking effect against withdrawal of the ice product from the relevant holding engagement, and in that for the releasing of this engagement there is effected a further forced opening of the penetration area, or so great a reversing pressure on the insertion end of the ice product that this pressure overcomes said self-locking effect.

2. Method according to claim 1**, characterized** in that the support aggregate is used for the withdrawal of cornets from a magazine stack.

3. Gripping and holding aggregate for use with the method according to claim 1, **characterized** in that it comprises a preferably plate-shaped support part for one or more engagement fields in which there are arranged penetration plate parts of an elastomer material which is configured with penetrations in the form of holes or incisions, such that these are suitable for push-in engagement of the ice products with said resulting lip edge deflections.

4. Aggregate according to claim 3, **characterized** in that for the gripping and supporting of cornets it is provided with a round hole in a rubber plate, said hole being configured as a central opening within the edge of a surrounding hole in a fixed support part for the rubber plate.

5. Aggregate according to claim 3, **characterized** in that for the gripping of an ice lolly product, it is provided with a rubber plate part with a straight slot perforation between opposing edges of an opening in a fixed support part for the rubber plate or rubber plate parts lying opposite each other.

6. Aggregate according to claim 3, **characterized** in that it is configured as an extraction element for the withdrawal of items from a magazine stack.
